(19) Europäisches Patentamt / European Patent Office / Office européen des brevets

(11) **EP 2 773 450 B1**

(12) **FASCICULE DE BREVET EUROPEEN**

(45) Date de publication et mention de la délivrance du brevet:
**29.07.2015 Bulletin 2015/31**

(51) Int Cl.:
***B01J 8/02*** *(2006.01)*     ***B01J 8/04*** *(2006.01)*
***B01D 3/20*** *(2006.01)*

(21) Numéro de dépôt: **12788611.7**

(22) Date de dépôt: **09.10.2012**

(86) Numéro de dépôt international:
**PCT/FR2012/000407**

(87) Numéro de publication internationale:
**WO 2013/064756 (10.05.2013 Gazette 2013/19)**

(54) **PLATEAU DE DISTRIBUTION D'UN MELANGE GAZ LIQUIDE EQUIPE D'ELEMENTS DE DISTRIBUTION PEU SENSIBLES AU DEFAUT D'HORIZONTALITE**

VERTEILERPLATTE FÜR EINE GAS/FLÜSSIGKEITSMISCHUNG MIT WEITGEHEND GEGEN MANGELNDE HORIZONTALITÄT UNEMPFINDLICHEN VERTEILERELEMENTEN

DISTRIBUTOR PLATE FOR A GAS/LIQUID MIXTURE EQUIPPED WITH DISTRIBUTOR ELEMENTS LARGELY INSENSITIVE TO THE LACK OF HORIZONTALITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2011 FR 1103336**

(43) Date de publication de la demande:
**10.09.2014 Bulletin 2014/37**

(73) Titulaire: **IFP Energies nouvelles**
**92852 Rueil-Malmaison Cedex (FR)**

(72) Inventeurs:
• **HAROUN, Yacine**
  **69520 Grigny (FR)**
• **BAZER-BACHI, Frédéric**
  **69540 Irigny (FR)**
• **AUGIER, Frédéric**
  **69360 Saint Symphorien d'Ozon (FR)**
• **ROGEON, Charly**
  **38300 Bourgoin-Jallieu (FR)**
• **BOYER, Christophe**
  **69390 Charly (FR)**

(56) Documents cités:
   WO-A1-2005/068039     WO-A1-2007/023225
   US-A1- 2006 163 758

**Description**

## DOMAINE DE L'INVENTION

La présente invention se situe dans le domaine de la distribution de gaz et de liquide dans les réacteurs catalytiques de type lits fixes, fonctionnant en écoulement gaz/liquide à co-courant descendant. La principale application visée est l'hydrotraitement de gazole ou d'autres coupes pétrolières et plus généralement tous les procédés faisant appel à un ou plusieurs réacteurs fonctionnant en écoulement gaz-liquide descendant.

La grande majorité des distributeurs existants sont composés d'un plateau équipé d'éléments de distribution, comme par exemple celles décrites dans l'article "Gas-liquid distributors for Trickle Bed Reactors: A Review", de R.N.Maifi & K.D.P.Nigam, Ind.Eng.Chem.Res, 2007, 46, 6464-6182.

Ces cheminées peuvent être de différents types, et positionnées suivant différentes configurations sur le plateau comme décrit dans les brevets US2002/0127160A1, US6093373, US2004/0197245A1, US2007/0241467A1, GB721247, US658738, US2007145610, US5942162.

L'objectif d'un plateau distributeur placé en amont d'un lit catalytique dans un réacteur fonctionnant à co-courant descendant de gaz et de liquide est de distribuer le mélange diphasique gaz et liquide de manière la plus homogène possible sur le lit catalytique situé en aval. En sortie des cheminées du plateau, l'écoulement du mélange diphasique forme généralement un jet concentré.

Le fonctionnement des plateaux distributeurs de l'art antérieur équipés de cheminées perforées repose sur la notion d'écoulement gravitaire. La distribution du liquide se fait par le passage du liquide dans les orifices distribués en général le long des parois latérales des cheminées et la distribution du gaz se fait par l'ouverture en tête de cheminée. Or un défaut d'horizontalité dans un tel plateau peut apparaitre sous l'effet du fléchissement du plateau sous son propre poids ou d'un décalage dudit plateau par rapport au plan horizontal lors de son installation.

En présence d'un défaut d'horizontalité du plateau, la hauteur de la garde liquide n'est plus uniforme sur le plateau distributeur, ce qui va entraîner des déséquilibres dans la répartition du liquide sur le lit catalytique aval, notamment lorsque le niveau du liquide est proche d'une rangée d'orifices.

Les plateaux distributeur de l'art antérieur équipés de cheminées dite "à cloche" sont également sensibles au défaut d'horizontalité du plateau. Une cheminée à cloche est constituée d'un cylindre centrale surmonté d'une cloche équipée de plusieurs fentes. Le passage du gaz et du liquide se fait par l'intermédiaire des fentes et par le bas de la cloche, également dans l'espace entre la cloche et le cylindre principal. D'autres variantes de la cheminée à cloche existent comme les cheminées dite "vapor-lift" (brevet US2007145610, US5942162) dont le principe de fonctionnement reste cependant le même.

Le fonctionnement des cheminées dites à cloches repose sur l'entrainement du liquide par le gaz à travers l'espace entre la cloche et le cylindre. Or en présence d'un défaut d'horizontalité du plateau, la hauteur de la garde liquide n'est plus uniforme sur le plateau distributeur. L'écart entre les surfaces ouvertes au gaz entre deux cheminées décalées devient alors relativement élevé et l'entrainement du liquide ne se fait plus de manière homogène entre les cheminées, ce qui provoque une forte mal-distribution du liquide. Les principaux facteurs aggravants ce phénomène sont l'ouverture du bas de la cloche et le nombre élevé de fentes.

Cette mal-distribution, si elle n'est pas maitrisée, peut sensiblement dégrader les performances du réacteur.

## DESCRIPTION SOMMAIRE DES FIGURES

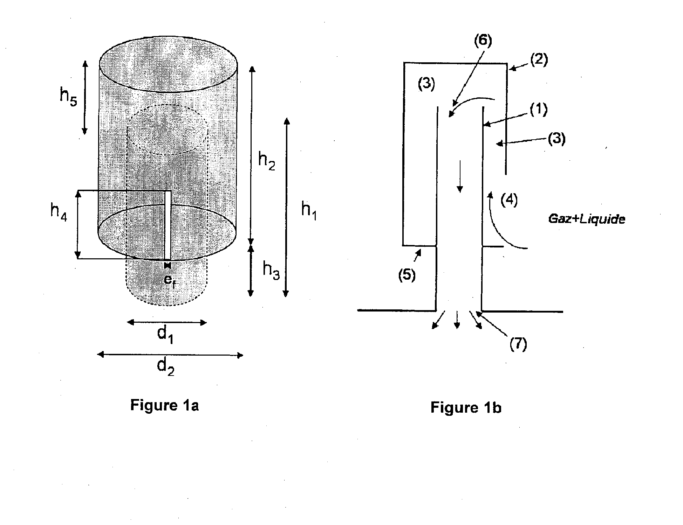

Les figures 1a et 1b représentent une vue schématique du plateau distributeur selon l'invention, montrant le cylindre externe (2) et le cylindre interne (1) qui constituent l'élément de distribution et dans lequel le cylindre externe (2) est surélevé d'une hauteur (h3) par rapport au plan de base du plateau distributeur.

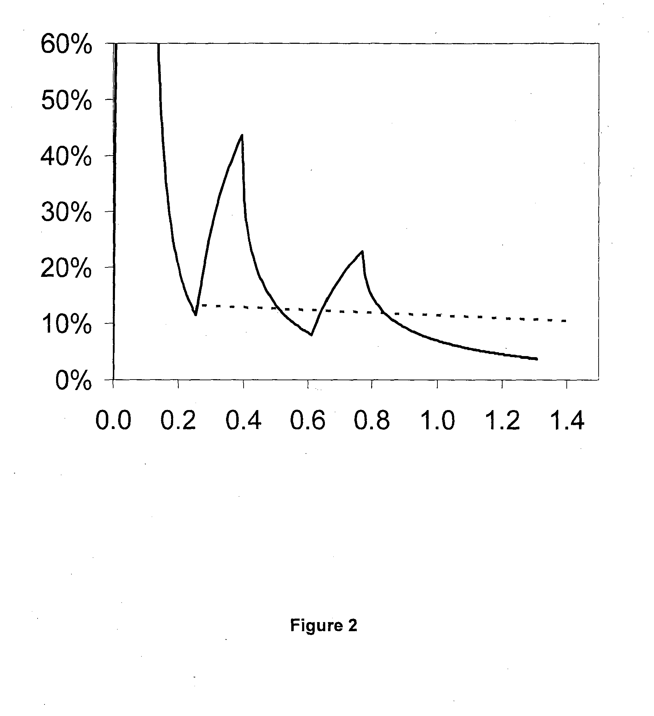

La figure 2 représente une courbe de variation de l'indice de déséquilibre liquide (défini plus loin dans la description) en fonction de la vitesse superficielle liquide (Vsl) permettant la comparaison du plateau selon l'invention avec un dispositif de cheminées selon l'art antérieur.

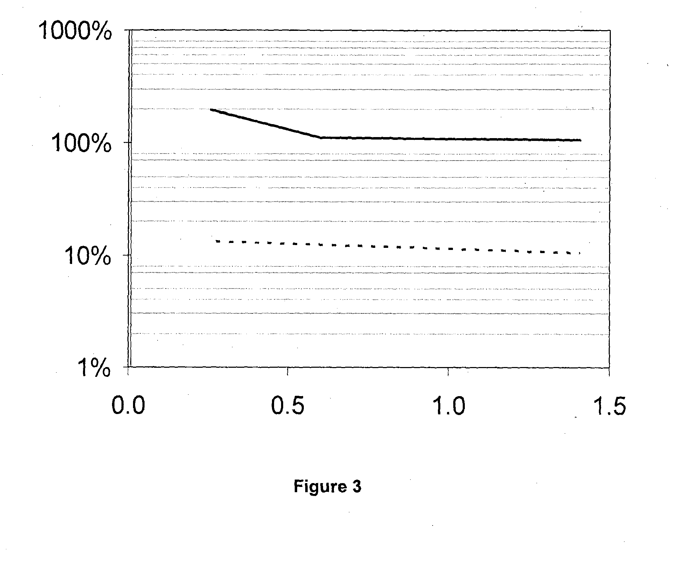

La figure 3 représente une courbe de variation de l'indice de déséquilibre liquide (défini plus loin dans la description) en fonction de la vitesse superficielle liquide (Vsl) permettant la comparaison du plateau selon l'invention avec un dispositif de l'art antérieur communément appelé "cheminées à cloches".

**DESCRIPTION SOMMAIRE DE L'INVENTION**

L'objectif de la présente invention est d'améliorer la qualité de distribution des plateaux distributeurs de l'art antérieur en les équipant d'éléments de distribution ayant une sensibilité aux défauts d'horizontalité plus faible que celle des cheminées perforées et les cheminées à cloches selon l'art antérieur, ainsi qu' une meilleure flexibilité de fonctionnement.

Le plateau distributeur selon la présente invention est composé d'une multiplicité d'éléments de distribution régulièrement répartis sur ledit plateau selon un pas rectangulaire, carré ou triangulaire.

L'élément de distribution du plateau distributeur selon la présente invention est composé de deux tubes cylindriques approximativement concentriques et verticaux, le tube cylindrique externe étant équipé d'une ou plusieurs fentes permettant le passage du gaz et du liquide.

Les deux tubes concentriques ont pour objectif de déterminer une zone de mélange annulaire pour le gaz et le liquide et de permettre la réintroduction du mélange gaz/liquide résultant en différents points de la section du réacteur de la manière la plus homogène possible.

Le tube cylindrique externe est relevé par rapport au plan du plateau, ce qui permet de dégager une hauteur (h3) formant une protection de la ou des fentes d'admission du liquide contre les éventuels encrassements dus aux impuretés que peut contenir la charge liquide particulièrement lorsque celle ci est une charge hydrocarbonée lourde. L'élévation du cylindre externe permet également de réduire l'encombrement sur le plan du plateau à l'avantage d'une meilleure répartition du liquide sur le plateau distributeur.

A la différence du fonctionnement des plateaux de l'art antérieur, le fonctionnement des éléments de distribution de l'invention se base principalement sur l'entrainement du liquide dans la partie montante de l'espace annulaire séparant les deux cylindres coaxiaux, sous l'effet de l'écoulement de la phase gazeuse. Le passage de l'écoulement dans l'espace annulaire se fait exclusivement par la surface située sur la paroi latérale, ce qui assure une meilleure maitrise de la fente sèche (section ouverte à l'écoulement du gaz) et rend ainsi le plateau selon l'invention moins sensible à un défaut d'horizontalité.

L'un des avantages de la présente invention est que la hauteur de la fente sèche est toujours suffisante pour permettre une admission homogène du gaz dans la zone annulaire et in fine pour permettre un entrainement de liquide équilibré entre cheminées.

En pratique, l'utilisation de ce nouvel élément de distribution permet de diminuer en moyenne, sur une gamme liquide importante, la sensibilité à un défaut d'horizontalité du plateau.

De façon plus précise, la présente invention peut se définir comme un plateau de distribution d'un écoulement gaz liquide à co-courant descendant positionné à différents niveaux d'un réacteur pouvant comporter plusieurs lits catalytiques, en vue d'assurer une distribution homogène du mélange gaz liquide résultant sur un lit catalytique situé en aval dudit plateau, ledit plateau étant muni d'éléments de distribution régulièrement répartis sur la surface du plateau selon un pas carré ou triangulaire.

Un élément de distribution est constitué de deux cylindres sensiblement co-axiaux appelé cylindre intérieur (1) de diamètre (d1) et de hauteur (h1), et cylindre extérieur (2) de diamètre (d2) et de hauteur (h2), la surface horizontale inférieure (5) séparant les deux cylindres étant fermée.

La paroi latérale du cylindre extérieur (2) est munie d'au moins une fente (4) sensiblement verticale permettant l'admission du gaz et du liquide dans la zone annulaire (3). Le mélange gaz liquide est entrainé dans la zone annulaire (3) selon un courant ascendant, puis passe dans le cylindre intérieur (1) par l'ouverture supérieure (6) de ce dernier, et redescend à l'intérieur du cylindre intérieur (1), puis est évacué par l'ouverture (7) située à l'extrémité inférieure du cylindre intérieur (1). Selon l'invention, la surface horizontale fermée (5) de l'élément de distribution est située au dessus de la base du plateau distributeur à une hauteur (h3) comprise entre 10 et 100 mm, et préférentiellement comprise entre 20 mm et 60 mm.

Le nombre de fentes verticales (4) de hauteur h4 est préférentiellement compris entre 1 et 3, et de manière encore préférée compris entre 1 et 2.

Le pas entre les éléments de distribution est préférentiellement un pas carré ou triangulaire compris entre 100 et 300 mm, et plus préférentiellement entre 100 et 200 mm.

La hauteur totale des éléments de distribution comptée depuis la base du plateau distributeur est comprise entre 100 et 500 mm, et préférentiellement comprise entre 200 et 400 mm.

Les dimensions principales des éléments de distribution sont notées de la façon suivante :

hauteur du cylindre externe (h2) :

diamètre du cylindre externe (d2) :

hauteur du cylindre interne (h1) :

diamètre du cylindre interne (d1) :

hauteur de la fente d'admission du mélange gaz liquide (h4) :

largeur de la fente d'admission du mélange gaz liquide (ef) :
hauteur du cylindre externe par rapport au plan de base du plateau (h3) :

Les valeurs de ces dimensions principales se situent dans les plages suivantes :

(h2) entre 100 et 500 mm, et préférentiellement entre 200 et 400 mm,
(d2) entre 15 et 300 mm, et préférentiellement entre 50 et 200 mm
(h1) entre 100 et 500 mm, et préférentiellement entre 200 et 400 mm
(d1) entre 10 et 100 mm, et préférentiellement entre 25 et 75 mm
(h4) entre 10 et 500 mm, et préférentiellement entre 100 et 300 mm
(ef) entre 1 et 5 mm, et préférentiellement entre 1 et 3 mm,
(h3) entre 10 et 100 mm, et préférentiellement entre 20 et 60 mm

Les fentes d'admission pour le gaz et le liquide peuvent avoir des formes assez variées, la plus simple et préférée étant une forme rectangulaire (h4, ef) ou une forme triangulaire toujours caractérisée par les dimensions h4 et ef, la pointe du triangle étant dirigée vers le haut ou vers le bas.
Le plateau de distribution selon la présente invention peut dans certains cas présenter un certain décalage entre les axes des deux cylindres interne et externe qui le constituent. L'expression "sensiblement" ou "approximativement" co-axiaux doit donc être entendue dans un sens large, la distance entre leur deux axes pouvant être comprise 0 et (d2 -d1)/ 4.
Le plateau de distribution selon la présente invention peut être complété par un ensemble de déflecteurs coniques, chaque déflecteur étant placé sous un élément de distribution, la partie élargie du cône étant dirigée vers le bas.
De manière générale, tout type déflecteurs connu de l'homme du métier est utilisable dans le cadre de la présente invention.
Le Plateau de distribution selon la présente invention peut également être complété par un ensemble d'éléments de grille placés en aval du plateau à une distance comprise entre 20 mm et 300 mm, et préférentiellement comprise entre 50 mm et 150 mm dudit plateau, les différents éléments de grille étant de plus disposés sur des plans différents. Lorsqu'ils existent, ces déflecteurs ou éléments de grille font partie intégrante du plateau selon l'invention.
Le plateau de distribution selon la présente invention trouve principalement son application dans des réacteurs mettant en oeuvre des réactions d'hydrotraitement, d'hydrogénation ou d'oxydation de coupes pétrolières à nombre d'atomes de carbone allant de 4 à 30, préférentiellement allant de 8 à 20.
Plus généralement, le plateau distributeur selon la présente invention trouve son application dans des réacteurs faisant appel à un écoulement à co-courant descendant de gaz et de liquide dans le régime dit "ruisselant", c'est à dire avec une vitesse superficielle du liquide comprise entre 0,1 et 1,5 cm/s.

## DESCRIPTION DETAILLEE DE L'INVENTION

L'invention peut être défini comme un plateau distributeur adapté aux écoulements diphasiques gaz liquide à co-courant descendant. Un tel plateau est destiné à être installé dans des réacteurs faisant appel à ce type d'écoulement diphasique, plus particulièrement dans le régime dit "ruisselant" qui est défini comme un écoulement dans lequel la phase continue est la phase gaz, et la phase discontinue est la phase liquide, le liquide étant présent sous forme de filets plus ou moins réguliers, avec une vitesse superficielle du liquide comprise entre 0,1 et 1,5 cm/s.
Les éléments de distribution sont régulièrement répartis sur le plateau distributeur selon un pas qui peut être rectangulaire, carré ou triangulaire.
Un élément de distribution est constitué de deux cylindres approximativement co-axiaux, le cylindre interne de diamètre d1 et le cylindre externe de diamètre d2.
Ces deux cylindres sensiblement co-axiaux définissent une zone annulaire (3) à travers laquelle circule le gaz et le liquide de façon ascendante. En effet le gaz et le liquide sont admis dans la zone annulaire (3) par le moyen d'une ou plusieurs fentes longitudinales (4) percées le long de la paroi du cylindre externe (2).
La partie inférieure de la fente admet en général le liquide, et la partie supérieure de la fente admet généralement le gaz. Il est donc essentiel que cette partie supérieure de la fente dite fente "sèche" soit suffisante pour admettre le gaz avec le débit voulu. C'est un des avantages des éléments de distribution selon la présente invention d'être peu sensibles à un éventuel défaut d'horizontalité en raison de la hauteur de la fente sèche qui est toujours suffisante pour permettre l'admission du gaz dans la zone annulaire (3).

Le cylindre externe (2), ne descend pas jusqu'à la base du plateau et s'arrête à une hauteur h3 de ce dernier. La fente longitudinale (4) démarre à partir de ladite hauteur h3 au dessus du plateau et s'étend jusqu'à la hauteur h3+h4.

La surface horizontale (5) séparant le cylindre externe (2) et le cylindre interne (1) est fermée.

Le nombre de fentes longitudinales (4) est limité à 2 ou 3 par élément de distribution. Ces différentes caractéristiques permettent d'améliorer sensiblement le fonctionnement des éléments de distribution, notamment en présence d'un défaut d'horizontalité. En effet, le fait de réduire le nombre de fentes et de fermer le bas de l'élément de distribution permet de mieux maitriser la hauteur de la garde liquide de manière à assurer une hauteur de fente sèche suffisante pour que, dans le cas d'un défaut d'horizontalité, l'écart entre les surfaces ouvertes au gaz entre deux éléments de distribution présentant une certaine déclinaison entre eux, soit faible. Contrairement aux brevets US2007145610, US5942162, le système ne nécessite pas de confiner l'écoulement diphasique dans la partie située entre les deux tubes concentriques où l'écoulement est de type gas-lift, car au contact du gaz et du liquide au niveau de la fente, une émulsion diphasique se forme et occupe tout l'espace annulaire défini par les cylindres sensiblement coaxiaux.

## **EXEMPLES**

Les deux exemples comparatifs qui suivent permettent d'illustrer les avantages du système de distribution selon la présente invention par rapport à deux dispositifs selon l'art antérieur.

L'exemple 1 compare l'efficacité de distribution du dispositif de distribution selon l'invention par rapport à un plateau distributeur standard muni de cheminées. Lorsque le plateau (selon l'art antérieur ou selon l'invention) est soumis à un défaut d'horizontalité de $\Delta H = 1$ cm, on quantifie la sensibilité au défaut d'horizontalité du plateau, en définissant l'indice de déséquilibre liquide comme suit :

$$Iq_L(\%) = \frac{Q_{L,che\min \acute{e}e1} - Q_{L,che\min \acute{e}e2}}{\left(Q_{L,che\min \acute{e}e1} + Q_{L,che\min \acute{e}e2}\right)/2}100$$

avec :

$Q_L$, cheminée 1,2 : le débit volumique liquide sortant des deux cheminées d'indice 1 et 2 du plateau situées à une différence de hauteur correspondant au défaut d'horizontalité de $\Delta H = 1$ cm.

Une faible valeur d'indice de déséquilibre liquide indique une faible sensibilité au défaut d'horizontalité. A l'inverse, une valeur élevée d'$Iq_L$ indique un fort déséquilibre de distribution.

Le plateau standard est équipé de cheminées percées d'orifices pour le passage du liquide répartis sur plusieurs rangées.

Les principales caractéristiques de ces cheminées standards sont les suivantes :

- pas triangulaire de 200 mm entre les cheminées
- rangées de trous à 50/100/150 mm de haut depuis la base du plateau
- hauteur de cheminée : 250 mm
- diamètre de la cheminée : 50 mm
- nombre et taille des trous par rangée :.3 trous de 7 mm

La configuration des trous de cheminées est définie pour une gamme de vitesses liquide comprise entre 0,2 et 1,3 cm/s, et pour une vitesse de gaz de 15 cm/s.

Les éléments de distribution selon l'invention ont les caractéristiques données dans le tableau 1 ci dessous.

L'indice 1 se rapporte au cylindre intérieur et l'indice 2 au cylindre extérieur.

| H4 (mm) | 150 |
|---|---|
| H5 (mm) | 25 |
| H2 (mm) | 320 |
| H3 (mm) | 40 |
| d1 (mm) | 50 |
| d2 (mm) | 110 |
| ef (mm) | 2 |
| Nombre de fente | 1 |

Tableau 1

La figure 2 présente la variation de l'indice de déséquilibre liquide $Iq_L$ (en ordonnée) en fonction de la vitesse superficielle $V_{SL}$ (en abscisse) pour le plateau selon l'art antérieur (courbe en traits pleins) et le plateau selon l'invention (courbe en traits pointillés).

Pour le plateau selon l'art antérieur, l'indice de déséquilibre varie entre 5 % et 40 % sur toute la plage de $V_{SL}$ considérée (de 0,1 à 1,3 cm/s) avec des pics correspondant aux $V_{SL}$ qui entrainent le dégagement ou l'obstruction d'un orifice.

Il y a donc la un effet très pénalisant de pics lié à la discontinuité des orifices de passage pour le gaz et le liquide.

En revanche, le plateau selon l'invention présente des performances stables, avec un indice de déséquilibre liquide $Iq_L$=13% sur toute la plage de fonctionnement en $V_{SL}$.

Cet exemple montre que le dispositif selon l'invention permet un gain significatif en flexibilité et en efficacité de distribution en présence d'un défaut d'horizontalité du plateau.

L'exemple 2 compare l'efficacité de distribution du plateau selon l'invention avec celle d'un plateau équipé de cheminées à cloches selon l'art antérieur, pour un défaut d'horizontalité de $\Delta h$=1 cm.

L'efficacité de distribution est toujours quantifiée par l'indice de déséquilibre liquide $Iq_L$. La vitesse superficielle varie de 0,1 à 1,3 cm/s.

Les caractéristiques du plateau à cheminée type à cloches sont données dans le tableau 2 ci dessous.

| hauteur de la cloche (mm) | 150 |
|---|---|
| hauteur de la cloche par rapport au plan de base du plateau (mm) | 40 |
| hauteur de la fente d'admission du mélange gaz liquide (mm) | 65 |
| diamètre du cylindre interne (mm) | 50 |
| diamètre de la cloche (mm) | 100 |
| largeur de la fente d'admission du mélange gaz liquide (mm) | 22 |
| Nombre de fente | 3 |

Tableau 2

Les caractéristiques du plateau muni des éléments de distribution selon l'invention sont données dans le tableau 3 ci dessous.

L'indice 1 se rapporte toujours au cylindre intérieur, et l'indice 2 se rapporte au cylindre extérieur.

| H4 (mm) | 150 |
|---|---|
| H5 (mm) | 25 |
| H2 (mm) | 320 |
| H3 (mm) | 40 |
| d1 (mm) | 50 |
| d2 (mm) | 110 |
| ef (mm) | 2 |
| Nombre de fente | 1 |

## Tableau 3

La variation de l'indice de déséquilibre liquide $Iq_L$ en fonction de la vitesse superficielle $V_{SL}$ pour les deux plateaux est présentée sur la figure 3.

Les résultats montrent une forte sensibilité au défaut d'horizontalité du plateau à cheminées "cheminées à cloches" (courbe en traits plein).

En effet, le taux de mal-distribution est supérieur à 100% sur toute la plage de fonctionnement en $V_{SL}$.

A l'inverse le plateau selon l'invention est moins sensible au défaut d'horizontalité imposé, l'indice de déséquilibre sur la plage de $V_{SL}$ étant pratiquement constant autour d'une valeur de 13% (courbe en traits pointillés).

Ces deux exemples montrent clairement l'intérêt du plateau selon la présente invention, ce dernier permettant de fortement atténuer l'effet d'un défaut d'horizontalité lors de l'installation du plateau distributeur, et ceci sur une plage de vitesse superficielle liquide allant de 0,1 à 1,3 cm/s, c'est à dire correspondant au régime dit ruisselant pour lequel le plateau selon l'invention est particulièrement bien adapté.

## Revendications

1. Plateau de distribution d'un écoulement gaz liquide à co-courant descendant positionné à différents niveaux d'un réacteur pouvant comporter plusieurs lits catalytiques, en vue d'assurer une distribution homogène du mélange gaz liquide résultant sur le lit catalytique situé en aval dudit plateau, ledit plateau étant muni d'éléments de distribution régulièrement répartis sur la surface du plateau selon un pas carré ou triangulaire, un élément de distribution étant constitué de deux cylindres sensiblement co-axiaux appelé cylindre intérieur (1) de diamètre (d1) et de hauteur (h1), et cylindre extérieur (2) de diamètre (d2) et de hauteur (h2), relevé d'une hauteur (h3) par rapport au plan du plateau, la surface horizontale inférieure (5) séparant les deux cylindres étant fermée et située à une hauteur (h3) au dessus de la base du plateau distributeur, comprise entre 10 et 100 mm et préférentiellement comprise entre 20 mm et 60 mm, et la paroi latérale du cylindre extérieur (2) étant munie d'au moins une fente (4) sensiblement verticale permettant l'admission du gaz et du liquide dans la zone annulaire (3), le mélange gaz liquide étant entrainé dans la zone annulaire (3) selon un courant ascendant, puis passant dans le cylindre intérieur (1) par l'ouverture supérieure (6) de ce dernier, et redescendant à l'intérieur du cylindre intérieur (1), puis étant évacué par l'ouverture (7) située à l'extrémité inférieure du cylindre intérieur (1).

2. Plateau de distribution d'un écoulement gaz liquide à co-courant descendant selon la revendication 1, dans lequel le nombre de fentes verticales (4) de hauteur (h4) est compris entre 1 et 3, et préférentiellement compris entre 1 et 2.

3. Plateau de distribution d'un écoulement gaz liquide à co-courant descendant selon la revendication 1, dans lequel le pas entre les éléments de distribution est un pas carré ou triangulaire compris entre 100 et 200 mm.

**4.** Plateau de distribution d'un écoulement gaz liquide à co-courant descendant selon la revendication 1, dans lequel la hauteur totale des éléments de distribution est comprise entre 200 et 400 mm.

**5.** Plateau de distribution d'un écoulement gaz liquide à co-courant descendant selon la revendication 1, dans lequel les dimensions des éléments de distribution sont les suivantes:

(h2) entre 100 et 500 mm, et préférentiellement entre 200 et 400 mm
(d2) entre 15 et 300 mm, et préférentiellement entre 50 et 200 mm
(h1) entre 100 et 500 mm, et préférentiellement entre 200 et 400 mm
(d1) entre 10 et 100 mm, et préférentiellement entre 25 et 75 mm
(h4) entre 10 et 500 mm et préférentiellement entre 100 et 300 mm
(ef) entre 1 et 5 mm et préférentiellement entre 1 et 3 mm,
(h3) entre 10 et 100 mm, et préférentiellement entre 20 et 60 mm

avec les notations suivantes:

(h2) hauteur du cylindre externe (h2)
(d2) diamètre du cylindre externe (d2)
(h1) hauteur du cylindre interne (h1)
(d1) diamètre du cylindre interne (d1)
(h4) hauteur de la fente d'admission du mélange gaz liquide (h4)
(ef) largeur de la fente d'admission du mélange gaz liquide (ef)
(h3) hauteur du cylindre externe par rapport au plan de base du plateau (h3)

**6.** Plateau de distribution d'un écoulement gaz liquide à co-courant descendant selon la revendication 1, dans lequel les fentes de passage pour le gaz et le liquide ont une forme triangulaire, la pointe du triangle étant dirigée vers le haut ou vers le bas.

**7.** Plateau de distribution d'un écoulement gaz liquide à co-courant descendant selon la revendication 1, dans lequel les deux cylindres intérieur et extérieur ne sont pas exactement coaxiaux mais décentrés d'une distance entre leur deux axes comprise entre 0 et $(d2 - d1)/4$.

**8.** Plateau de distribution d'un écoulement gaz liquide à co-courant descendant selon la revendication 1, dans lequel le plateau de distribution est complété par un ensemble de déflecteurs coniques faisant partie intégrante dudit plateau, chaque déflecteur étant placé sous un élément de distribution, la partie élargie du cône étant dirigée vers le bas.

**9.** Plateau de distribution d'un écoulement gaz liquide à co-courant descendant selon la revendication 1, dans lequel le plateau de distribution est complété par un ensemble de grille faisant partie intégrante dudit plateau et placé en aval du plateau à une distance comprise entre 20 et 300 mm, et préférentiellement comprise entre 50 et 150 mm dudit plateau, les différents éléments de grille étant de plus disposés sur des plans différents.

**10.** Utilisation du plateau distributeur selon la revendication 1 dans un procédé d'hydrotraitement, d'hydrogénation ou d'oxydation de coupes pétrolières à nombre d'atomes de carbone allant de 4 à 20, préférentiellement allant de 8 à 20.

**11.** Utilisation du plateau distributeur selon la revendication 1 dans tout procédé faisant appel à un écoulement à co-courant descendant de gaz et de liquide dans le régime dit ruisselant, c'est à dire avec une vitesse superficielle du liquide comprise entre 0,1 et 1,5 cm/s.

**Patentansprüche**

**1.** Verteilerplatte für eine im Gleichstrom abwärts strömende Gas-Flüssigkeits-Strömung, welche auf verschiedenen Ebenen eines Reaktors positioniert ist, der mehrere katalytische Betten aufweisen kann, zwecks Sicherstellung einer homogenen Verteilung des resultierenden Gas-Flüssigkeitsgemisches auf dem stromabwärts der Platte angeordneten katalytischen Bett, wobei die Platte mit Verteilungselementen ausgestattet ist, die gleichmäßig auf der Fläche der Platte in einem quadratischen oder dreieckigen Raster verteilt sind, wobei ein Verteilungselement aus zwei im Wesentlichen koaxialen Zylindern besteht, die als innerer Zylinder (1) mit einem Durchmesser (d1) und einer Höhe (h1) und äußerer Zylinder (2) mit einem Durchmesser (d2) und einer Höhe (h2) bezeichnet werden, angehoben auf eine Höhe (h3) in Bezug auf die Ebene der Platte, wobei die untere horizontale Fläche (5), welche die beiden Zylinder trennt, geschlossen ist und auf einer Höhe (h3) oberhalb der Basis der Verteilerplatte angeordnet ist, die zwischen 10 und 100 mm und vorzugsweise zwischen 20 mm und 60 mm liegt, und wobei die Seitenwand des äußeren Zylinders (2) mit wenigstens einem im Wesentlichen vertikalen Schlitz (4) ausgestattet ist, der den Einlass des Gases und der Flüssigkeit in den ringförmigen Bereich (3) ermöglicht, wobei das Gas-Flüssigkeitsgemisch in einem Aufwärtsstrom in den ringförmigen Bereich (3) mitgenommen wird, danach in den inneren Zylinder (1) über die obere Öffnung (6) dieses Letzteren weiterströmt und im Inneren des inneren Zylinders (1) wieder hinabströmt, wobei es anschließend über die am unteren Ende des inneren Zylinders (1) befindliche Öffnung (7) abgeführt wird.

2. Verteilerplatte für eine im Gleichstrom abwärts strömende Gas-Flüssigkeits-Strömung nach Anspruch 1, wobei die Anzahl vertikaler Schlitze (4) mit einer Höhe (h4) zwischen 1 und 3 beträgt und vorzugsweise 1 bis 2 beträgt.

3. Verteilerplatte für eine im Gleichstrom abwärts strömende Gas-Flüssigkeits-Strömung nach Anspruch 1, wobei das Raster der Verteilungselemente ein quadratisches oder dreieckiges Raster mit einer Schrittweite ist, die zwischen 100 und 200 mm liegt.

4. Verteilerplatte für eine im Gleichstrom abwärts strömende Gas-Flüssigkeits-Strömung nach Anspruch 1, wobei die Gesamthöhe der Verteilungselemente zwischen 200 und 400 mm liegt.

5. Verteilerplatte für eine im Gleichstrom abwärts strömende Gas-Flüssigkeits-Strömung nach Anspruch 1, wobei die Abmessungen der Verteilungselemente die folgenden sind:

(h2) zwischen 100 und 500 mm und vorzugsweise zwischen 200 und 400 mm,
(d2) zwischen 15 und 300 mm und vorzugsweise zwischen 50 und 200 mm,
(h1) zwischen 100 und 500 mm und vorzugsweise zwischen 200 und 400 mm,
(d1) zwischen 10 und 100 mm und vorzugsweise zwischen 25 und 75 mm,
(h4) zwischen 10 und 500 mm und vorzugsweise zwischen 100 und 300 mm,
(ef) zwischen 1 und 5 mm und vorzugsweise zwischen 1 und 3 mm,
(h3) zwischen 10 und 100 mm und vorzugsweise zwischen 20 und 60 mm,

mit folgenden Bezeichnungen:

(h2) - Höhe des äußeren Zylinders (h2),
(d2) - Durchmesser des äußeren Zylinders (d2),
(h1) - Höhe des inneren Zylinders (h1),
(d1) - Durchmesser des inneren Zylinders (d1),
(h4) - Höhe des Einlassschlitzes für das Gas-Flüssigkeitsgemisch (h4),
(ef) - Breite des Einlassschlitzes für das Gas-Flüssigkeitsgemisch (ef),
(h3) - Höhe des äußeren Zylinders in Bezug auf die Basisebene der Platte (h3).

6. Verteilerplatte für eine im Gleichstrom abwärts strömende Gas-Flüssigkeits-Strömung nach Anspruch 1, wobei die Durchlassschlitze für das Gas und die Flüssigkeit eine dreieckige Form aufweisen, wobei die Spitze des Dreiecks nach oben oder nach unten gerichtet ist.

7. Verteilerplatte für eine im Gleichstrom abwärts strömende Gas-Flüssigkeits-Strömung nach Anspruch 1, wobei der innere und der äußere Zylinder nicht exakt koaxial sind, sondern exzentrisch mit einem Abstand zwischen ihren beiden Achsen sind, der zwischen 0 und (d2-d1)/4 liegt.

8. Verteilerplatte für eine im Gleichstrom abwärts strömende Gas-Flüssigkeits-Strömung nach Anspruch 1, wobei die Verteilerplatte durch eine Anordnung von konischen Ablenkelementen vervollständigt wird, die einen untrennbaren Bestandteil der Platte darstellen, wobei jedes Ablenkelement unter einem Verteilungselement angeordnet ist, wobei der erweiterte Teil des Kegels nach unten gerichtet ist.

9. Verteilerplatte für eine im Gleichstrom abwärts strömende Gas-Flüssigkeits-Strömung nach Anspruch 1, wobei die Verteilerplatte durch eine Gitteranordnung vervollständigt wird, die einen untrennbaren Bestandteil der Platte darstellt und stromabwärts der Platte in einem Abstand von der Platte angeordnet ist, der zwischen 20 und 300 mm und vorzugsweise zwischen 50 und 150 mm liegt, wobei die verschiedenen Gitterelemente außerdem auf verschiedenen Ebenen angeordnet sind.

10. Verwendung der Verteilerplatte nach Anspruch 1 bei einem Verfahren zur Hydrobehandlung, Hydrierung oder Oxidation von Erdölfraktionen mit einer Anzahl der Kohlenstoffatome, die 4 bis 20 und vorzugsweise 8 bis 20 beträgt.

11. Verwendung der Verteilerplatte nach Anspruch 1 bei einem beliebigen Verfahren, bei dem eine im Gleichstrom abwärts strömende Strömung von Gas und von Flüssigkeit im sogenannten Rieselbetrieb verwendet wird, das heißt mit einer Oberflächengeschwindigkeit der Flüssigkeit, die zwischen 0,1 und 1,5 cm/s liegt.

**Claims**

1. A distributor plate for a gas-liquid flow in downflow co-current mode positioned at various levels of a reactor which may comprise a plurality of catalytic beds, in order to ensure homogeneous distribution of the resulting gas-liquid mixture over a catalytic bed located downstream of said plate, said plate being provided with distribution elements distributed regularly over the surface of the plate in a square or triangular pattern, a distribution element being constituted by two substantially coaxial cylinders termed the inner cylinder (1) with a diameter (d1) and height (h1), and the outer cylinder (2) with a diameter (d2) and height (h2), raised by a height (h3) with respect to the plane of the plate, the lower horizontal surface (5) separating the two cylinders being closed and located at a height (h3) above the base of the distributor plate which is in the range 10 to 100 mm, preferably in the range 20 mm to 60 mm, and the lateral wall of the outer cylinder (2) being provided with at least one substantially vertical slot (4) for admitting gas and liquid into the annular zone (3), the gas-liquid mixture being entrained in the annular zone (3) as an upflowing stream, then passing into the inner cylinder (1) via the upper opening (6) thereof and dropping inside the inner cylinder (1), then being evacuated via the opening (7) located at the lower end of the inner cylinder (1).

2. A distributor plate for a gas-liquid flow in downflow co-current mode according to claim 1, in which the number of vertical slots (4) with height (h4) is in the range 1 to 3, preferably in the range 1 to 2.

3. A distributor plate for a gas-liquid flow in downflow co-current mode according to claim 1, in which the pitch between the distribution elements is in a square or triangular pattern with a dimension in the range 100 to 200 mm.

4. A distributor plate for a gas-liquid flow in downflow co-current mode according to claim 1, in which the total height of the distribution elements is in the range 200 to 400 mm.

5. A distributor plate for a gas-liquid flow in downflow co-current mode according to claim 1, in which the dimensions of the distribution elements are as follows:

   (h2) is in the range 100 to 500 mm, preferably in the range 200 to 400 mm;
   (d2) is in the range 15 to 300 mm, preferably in the range 50 to 200 mm;
   (h1) is in the range 100 to 500 mm, preferably in the range 200 to 400 mm;
   (d1) is in the range 10 to 100 mm, preferably in the range 25 to 75 mm;
   (h4) is in the range 10 to 500 mm, preferably in the range 100 to 300 mm;
   (ef) is in the range 1 to 5 mm, preferably in the range 1 to 3 mm;
   (h3) is in the range 10 to 100 mm, preferably in the range 20 to 60 mm;

   with the following notations:

   (h2): height of outer cylinder (h2);
   (d2): diameter of outer cylinder (d2);
   (h1): height of inner cylinder (h1);
   (d1): diameter of inner cylinder (d1);
   (h4): height of the admission slot for the gas-liquid mixture (h4);
   (ef): width of the admission slot for the gas-liquid mixture (ef);
   (h3): height of the outer cylinder with respect to the base plane of the plate (h3).

6. A distributor plate for a gas-liquid flow in downflow co-current mode according to claim 1, in which the slots for passage of gas and liquid have a triangular shape, the point of the triangle being directed upwardly or downwardly.

7. A distributor plate for a gas-liquid flow in downflow co-current mode according to claim 1, in which the two cylinders, inner and outer, are not exactly coaxial but are off-centre by a distance between their two axes in the range 0 to (d2 - d1)/4.

8. A distributor plate for a gas-liquid flow in downflow co-current mode according to claim 1, in which the distributor plate is completed by a set of conical deflectors forming an integral part of said plate, each deflector being placed beneath a distribution element, the enlarged portion of the cone being directed downwardly.

9. A distributor plate for a gas-liquid flow in downflow co-current mode according to claim 1, in which the distributor plate is completed by a set of screens forming an integral part of said plate and placed downstream of the plate by a distance in the range 20 to 300 mm, preferably in the range 50 to 150 mm from said plate, the various screen elements also being disposed in different planes.

10. Use of a distributor plate according to claim 1 in a process for the hydrotreatment, hydrogenation or oxidation of oil cuts containing 4 to 20 carbon atoms, preferably 8 to 20 carbon atoms.

11. Use of a distributor plate according to claim 1 in any process using a co-current downflow of gas and liquid in "trickle bed" mode, i.e. with a surface velocity of liquid in the range 0.1 to 1.5 cm/s.

**Figure 1a**

**Figure 1b**

Figure 2

**Figure 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020127160 A1
- US 6093373 A
- US 20040197245 A1
- US 20070241467 A1
- GB 721247 A
- US 658738 A
- US 2007145610 A
- US 5942162 A

**Littérature non-brevet citée dans la description**

- **R.N.MAIFI ; K.D.P.NIGAM, LND.** Gas-liquid distributors for Trickle Bed Reactors: A Review. *Eng.Chem.Res,* 2007, vol. 46, 6464-6182